# EUROPÄISCHE PATENTSCHRIFT

(11) **EP 0 774 589 B1**
(45) Veröffentlichungstag und Bekanntmachung des Hinweises auf die Patenterteilung: **14.03.2001**
(21) Anmeldenummer: 96810538.7
(22) Anmeldetag: 13.08.1996
(51) Int. Cl.: F16B 19/14

(54) **Bolzen zum Eintreiben in harte Aufnahmewerkstoffe**
Bolt for being driven into hard parent materials
Boulon destiné à être enfoncé dans un substrat de haute dureté

(30) Priorität: 17.11.1995 DE 19542949
(43) Veröffentlichungstag der Anmeldung: 21.05.1997
(73) Patentinhaber: HILTI Aktiengesellschaft, 9494 Schaan (LI)
(72) Erfinder: Buhofer, Tobias, 8053 Zürich (CH); Rohrmoser, Günter, 6812 Meiningen (AT)
(74) Vertreter: Wildi, Roland

(56) Entgegenhaltungen:
- EP-A- 0 640 695
- FR-A- 1 272 300
- GB-A- 725 310
- GB-A- 1 224 489
- US-A- 4 209 889
- US-A- 5 286 153

## Beschreibung

Die Erfindung betrifft ein Befestigungselement, wie Bolzen, Nagel und dgl. aus Stahl mit einem Befestigungsbereich und einem den Befestigungsbereich im Durchmesser übersteigenden, einstückig damit verbundenen Anschlussbereich.

In der Befestigungstechnik werden Befestigungselemente, insbesondere in Form von Bolzen, Nägeln und dgl., zum Befestigen von Gegenständen an harten Aufnahmewerkstoffen, wie Beton, Gestein oder Metall verwendet. Diese Befestigungselemente weisen als Befestigungsbereich einen Schaft mit einer verjüngenden Spitze und einen der Spitze gegenüberliegenden, an den Schaft anschliessenden, den Schaft im Durchmesser meistens übersteigenden Anschlussbereich auf. Ohne vorzubohren werden diese Befestigungselemente direkt in den harten Aufnahmewerkstoff eingetrieben.

Der Eintreibvorgang erfolgt beispielsweise mittels eines pulverkraftbetriebenen Setzgerätes. Da dieser Eintreibvorgang innerhalb von Bruchteilen einer Sekunde erfolgt, ist die auf das Befestigungselement einwirkende Belastung sehr gross. Die grösste Belastung entsteht im setzrichtungsseitigen Bereich des Schaftes, wenn das Befestigungselement während des Eintreibvorganges Aufnahmewerkstoff zu verdrängen hat. Um eine Beschädigung des Befestigungselementes verhindern zu können, muss dieses eine hohe Festigkeit aufweisen. Diese hohe Festigkeit wirkt sich jedoch negativ auf die ebenfalls notwendige Zähigkeit des gesamten Befestigungselementes aus.

Aus der DE-PS 1 009 570 ist ein Befestigungselement bekannt, das einen Befestigungs- und einen Anschlussbereich mit einem Aussengewinde aufweist. Das Befestigungselement ist mittels Pulverkraft wenigstens teilweise in einen Aufnahmewerkstoff treibbar. Der aus dem Aufnahmewerkstoff ragende Anschlussbereich dient der Befestigung eines Gegenstandes an dem Aufnahmewerkstoff.

Der Befestigungsbereich wird gebildet von einem im wesentlichen zylindrischen Schaft, mit einer sich in Setzrichtung verjüngenden Spitze. An den Befestigungsbereich schliesst sich der Anschlussbereich einstückig an und der Anschlussbereich übersteigt den Durchmesser des Befestigungsbereiches.

Damit das bekannte Befestigungselement in einen Aufnahmewerkstoff eingetrieben werden kann, muss das Befestigungselement eine entsprechend hohe Härte aufweisen. Da mit zunehmender Härte die Zähigkeit des Befestigungselementes sinkt, kann es beim Auftreten starker, ruckartiger, vom befestigten Gegenstand ausgehender Belastungen zu einem Versagen des Befestigungselementes kommen.

Ein weiteres Befestigungselement ist aus der DE-OS 41 39 653 bekannt. Dieses Befestigungselement setzt sich aus einem, in einen harten Aufnahmewerkstoff eintreibbaren Befestigungsbereich mit hoher Festigkeit und einem den Befestigungsbereich umgebenden, ringförmigen Anschlussbereich mit geringerer Festigkeit zusammen. Der aus einem korrosionsbeständigen Stahl bestehende Befestigungsbereich besteht im wesentlichen aus einem Schaft, der sich im setzrichtungseitigen Endbereich zu einer Spitze verjüngt. In einem der Setzrichtung gegenüberliegenden Endbereich weist der Befestigungsbereich einen kleinen, den Durchmesser des Schaftes übersteigenden Bund auf, der beim Eintreiben des Befestigungselementes den Anschlussbereich gegen die Oberfläche des Aufnahmewerkstoffes zieht. Der Anschlussbereich kann als Aussengewindeteil oder als Kopfteil ausgebildet sein.

Der Befestigungsbereich wird aus einem Rohling hergestellt, dessen Durchmesser dem Durchmesser des Schaftes entspricht. Der Rohling weist aufgrund des hohen Umformgrades eine derart hohe Festigkeit auf, dass durch Kalt- oder Halbwarmumformung nur ein kleiner Bund an dem Schaft anstauchbar ist.

Dynamische, von einem befestigten Gegenstand ausgehende, auf den Anschlussbereich einwirkende Zugkräfte müssen von dem genannten kleinen Bund aufgenommen werden insbesonders bei ruckartiger, auf das Befestigungselement einwirkender Belastung kann ein Versagen durch unzureichende Überzugswerte eintreten, was auf den kleinen mit dem Anschlussbereich zusammenwirkenden Bund zurückzuführen ist. Zudem erfordert die zweiteilige Ausbildung des Befestigungselementes ein aufwendiges Herstell-Verfahren.

Aus der GB-1 224 489 ist ein aus einem rostfreien Stahl gefertigtes Befestigungselement in Form einer Schraube bekannt, das einen als Anschlussbereich dienenden Schraubenkopf und einen als Befestigungsbereich dienenden Schaft mit einem Aussengewinde aufweist. Der Befestigungsbereich zeichnet sich durch eine hohe Oberflächenhärte und einen zähen Kern aus, wobei der Kern eine wesentlich geringere Härte aufweist als die Oberfläche des Befestigungsbereiches und des Schraubenkopfes.

Der Erfindung liegt die Aufgabe zugrunde, ein einfach und wirtschaftlich herstellbares Befestigungselement zu schaffen, das sich gut in harte Aufnahmewerkstoffe eintreiben lässt. Mit dem Befestigungselement sollen Gegenstände an harten Aufnahmewerkstoffen befestigt werden können und das Befestigungselement soll die von einem befestigten Gegenstand ausgehenden starken, dynamischen Belastungen, sicher aufnehmen können.

Erfindungsgemäss wird die Aufgabe dadurch gelöst, dass der Anschlussbereich des Befestigungselementes einen Umformgrad von 20% - 55% sowie eine Härte von 35 bis 43 HRC und der Befestigungsbereich einen Umformgrad von 70% - 80% sowie eine Härte von 46 bis 55 HRC aufweist.

Das erfindungsgemässe Befestigungselement weist einen Befestigungsbereich auf, der in einen harten Aufnahmewerkstoff eintreibbar ist. An den Befestigungsbereich schliesst sich entgegen der Setzrichtung ein Anschlussbereich an, über den Gegenstände mit dem Befestigungselement in Verbindung gebracht werden können. Die Aussenkontur des Anschlussbereiches überragt die Aussenkontur des Befestigungsbereiches in radialer Richtung. Damit der Anschlussbereich in der Lage ist, stossartige, von einem befestigten Gegenstand ausgehende, dynamische Belastungen aufnehmen zu können, beträgt die Härte des Anschlussbereiches 35 bis 43 HRC und die Härte des Befestigungsbereiches 46 bis 55 HRC.

Um eine gegenüber dem Befestigungsbereich geringere Festigkeit und somit eine grössere Zähigkeit des Anschlussbereiches erreichen zu können, weist der Anschlussbereich einen Umformgrad von 20% bis 55% und der Befestigungsbereich einen Umformgrad von 70% - 80% auf.

Ausgangsmaterial für das Befestigungselement kann beispielsweise ein durch Ziehen hergestellter Stahldraht sein der mittels Fliesspressen oder Hämmern im Befestigungsbereich weiter verfestigt wird, so dass die Härte in diesem Bereich zunimmt.

Ein gutes Eintreibverhalten des Befestigungselementes wird zweckmässigerweise mit einem Befestigungsbereich erreicht, der als im wesentlichen zylindrischer Schaft ausgebildet ist, der sich zu seinem freien Ende hin verjüngt. Eine Verjüngung des Schaftes zu einer Spitze ist möglich.

Der sich an den Befestigungsbereich anschliessende Anschlussbereich ist vorteilhafterweise mit einem Aussengewinde versehen. Eine lösbare Befestigung eines Gegenstandes an einem Aufnahmewerkstoff ist dadurch möglich.

Die Festlegung eines Gegenstandes an der Oberfläche eines Aufnahmewerkstoffes kann auch mit einem Befestigungselement erfolgen, dessen Anschlussbereich vorzugsweise als Nagelkopf ausgebildet ist. Ein derartiges Befestigungselement ist einfach im Aufbau, wirtschaftlich in der Herstellung und ist in der Lage ruckartige, dynamische Zugkräfte und Querkräfte aufzunehmen, die von einem befestigten Gegenstand ausgehen.

Ein Befestigungselement mit einer hohen Korrosionsbeständigkeit wird zweckmässigerweise mit einem stickstofflegierten, austenitischen Stahl mit einem Gehalt von
2 bis 22 % Mn
1 bis 3 % Mo
0,2 bis 1,2 % N
15 bis 26 % Cr
0 bis 17 % Ni
erreicht.

Die Erfindung wird anhand von Zeichnungen, die zwei Ausführungsbeispiele wiedergeben, näher erläutert. Es zeigen:
- Fig. 1: ein erfindungsgemässes Befestigungselement mit einem Aussengewinde im Anschlussbereich und einer auf den Befestigungsbereich aufgesteckten Rondelle;
- Fig. 2: ein weiteres, erfindungsgemässes Befestigungselement mit einem als Nagelkopf ausgebildeten Anschlussbereich und einer auf den Befestigungsbereich aufgesteckten Rondelle.

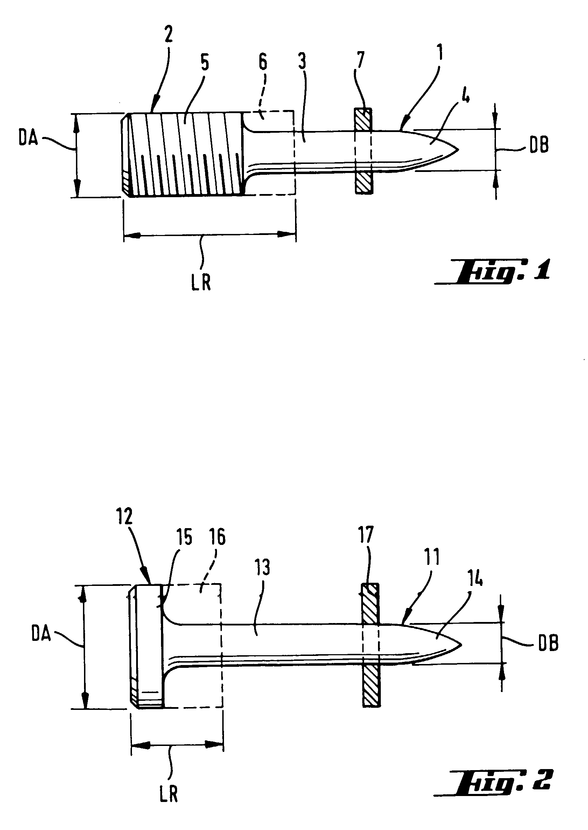

Die in den Fig. 1 und Fig. 2 dargestellten Befestigungselemente setzen sich aus einem Befestigungsbereich 1, 11 mit dem Durchmesser DB und einem Anschlussbereich 2, 12 mit dem Durchmesser DA zusammen. Der Befestigungsbereich 1, 11 weist einen zylindrischen Schaft 3, 13 auf, der sich in Setzrichtung zu einer Spitze 4, 14 verjüngt. Beim Eintreibvorgang des erfindungsgemässen Befestigungselementes wird der Befestigungsbereich 1, 11 in einen nicht dargestellten Aufnahmewerkstoff eingetrieben.

Dabei entstehen sehr hohe Belastungen. Damit sich der Befestigungsbereich 1, 11 nicht verformen kann, muss er eine hohe Festigkeit aufweisen. Der Anschlussbereich 2, 12 dient der Festlegung eines nicht dargestellten Gegenstandes an dem Aufnahmewerkstoff. Damit ruckartig auftretende, dynamische Zugkräfte elastisch von dem Befestigungselement, ohne dessen Beschädigung aufgenommen werden können, muss der Anschlussbereich 2, 12 eine grössere Zähigkeit aufweisen als der Befestigungsbereich 1, 11.

Für die Herstellung der in den Fig. 1 und Fig. 2 dargestellten Befestigungselemente wird ein Ausgangsmaterial 6, 16 verwendet, das ein stickstofflegierter, austenitischer Stahldraht mit hoher Korrosionsbeständigkeit ist, dessen Festigkeit unterhalb der maximal möglichen Festigkeit dieser Stahlsorte liegt. Die Härte dieses Ausgangsmaterials 6, 16 beträgt 35 bis 43 HRC. Der Durchmesser des Ausgangsmaterials 6, 16 entspricht im wesentlichen dem fertigen Durchmesser DA des Anschlussbereiches 2, 12.

In der Fig. 1 ist das, die Länge LR aufweisende Ausgangsmaterial 6 strichliert dargestellt. Mittels Fliesspressen wird ein Bereich des Ausgangsmaterials 6 kaltverfestigt, so dass sich ein Befestigungsbereich 1 bildet, dessen Durchmesser DB kleiner ist als der Durchmesser DA des Anschlussbereiches 2. Die Härte dieses Befestigungsbereiches 1 beträgt 46 bis 55 HRC und ist somit höher als die Härte des Anschlussbereiches 2. Der fliessgepresste Befestigungsbereich 1 verjüngt sich in Setzrichtung zu einer Spitze 4.

Aufgrund der geringeren Härte im Anschlussbereich 2 ist es möglich, den Anschlussbereich 2 mit einem Aussengewinde 5 zu versehen. Am Aussengewinde eines in einen Aufnahmewerkstoff eingetriebenen Befestigungselementes ist ein Gegenstand lösbar befestigbar.

In der Fig. 2 ist das, die Länge LR aufweisende Ausgangsmaterial 16 strichliert dargestellt. Mittels Fliesspressen wird ein Bereich des Ausgangsmaterials 16 kaltverfestigt, so dass sich ein Befestigungsbereich 11 bildet, dessen Durchmesser DB kleiner ist als der Durchmesser DA des als Nagelkopf 15 ausgebildeten Anschlussbereiches 12. Die Härte dieses Befestigungsbereiches 11 beträgt 46 bis 55 HRC und ist somit höher als die Härte des Anschlussbereiches 12. Der fliessgepresste Befestigungsbereich 11 verjüngt sich in Setzrichtung zu einer Spitze 14.

Die Befestigungsbereiche 1, 11 der in Fig. 1 und Fig. 2 dargestellten Befestigungselemente sind umgeben von einer Rondelle 7, 17, die reibschlüssig auf dem Befestigungsbereich 1, 11 sitzt. Der Aussendurchmesser dieser Rondelle 7, 17 entspricht im wesentlichen dem Aussendurchmesser des Anschlussbereiches 2, 12. Die Rondelle 7, 17 dient der Zentrierung des Befestigungselementes in einer Aufnahmebohrung eines Führungsrohres eines nicht dargestellten, pulverkraftbetriebenen Setzgerätes. Der Aussendurchmesser der Rondelle 7, 17 kann auch grösser sein als der Durchmesser des Anschlussbereiches 12.

## Patentansprüche

1. Befestigungselement, wie Bolzen, Nagel und dgl. aus Stahl mit einem Befestigungsbereich (1, 11) und einem den Befestigungsbereich (1, 11) im Durchmesser übersteigenden, einstückig damit verbundenen Anschlussbereich (2, 12), **dadurch gekennzeichnet,** dass der Anschlussbereich (2, 12) einen Umformgrad von 20% - 55% sowie eine Härte von 35 bis 43 HRC und der Befestigungsbereich (1, 11) einen Umformgrad von 70% - 80% sowie eine Härte von 46 bis 50 HRC aufweist.

2. Befestigungselement nach Anspruch 1 dadurch gekennzeichnet, dass der Befestigungsbereich (1, 11) als im wesentlichen zylindrischer Schaft (3, 13) ausgebildet ist, der sich zu seinem freien Ende hin verjüngt.

3. Befestigungselement nach einem der Ansprüche 1 oder 2, dadurch gekennzeichnet, dass der Anschlussbereich (2) mit einem Aussengewinde (5) versehen ist.

4. Befestigungselement nach einem der Ansprüche 1 oder 2, dadurch gekennzeichnet, dass der Anschlussbereich (12) als Nagelkopf (15) ausgebildet ist.

5. Befestigungselement nach einem der Ansprüche 1 bis 4, aus stickstofflegierten, austenitischen Stahl mit einem Gehalt von
2 bis 22 % Mn
1 bis 3 % Mo
0,2 bis 1,2 % N
15 bis 26 % Cr
0 bis 17 % Ni.

## Claims

1. Fastening element, such as bolts, nails and the like of steel, comprising a fastening area (1, 11) and a connecting area (2, 12) which diametrically protrudes over the fastening area (1, 11) and is integrated thereto, **characterised in that** the connecting area (2, 12) has a reshaping degree of between 20% and 55% and a hardness between 35 and 43 HRC, and the fastening area (1, 11) has a reshaping degree of between 70% and 80% and a hardness between 46 and 50 HRC.

2. Fastening element according to Claim 1, **characterised in that** the fastening area (1, 11) is designed as an essentially cylindrical shaft (3, 13) which narrows towards its free end.

3. Fastening element according to one of Claims 1 or 2, **characterised in that** the connecting area (2) is provided with an outside thread (5).

4. Fastening element according to one of Claims 1 or 2, **characterised in that** the connecting area (12) is designed as a nailhead (15).

5. Fastening element according to one of Claims 1 to 4 of nitrogen alloyed austenitic steel with a content of
2 to 22 % Mn
1 to 3 % Mo
0.2 to 1.2 % N
15 to 26 % Cr
0 to 17 % Ni.

## Revendications

1. Élément de fixation tel que goujon, clou et analogues, en acier avec une zone de fixation (1, 11) et une zone de raccordement (2, 12) reliée d'un seul tenant à la précédente et supérieure en diamètre à celle-ci, caractérisé en ce que la zone de raccordement (2, 12) présente un taux de déformation de 20 % à 55 % ainsi qu'une dureté Rockwell C de 35 à 43 et la zone de fixation (1, 11) présente un taux de déformation de 70 % à 80 % ainsi qu'une dureté Rockwell C de 46 à 50.

2. Élément de fixation selon la revendication 1, caractérisé en ce que la zone de fixation (1, 11) est conçue sous la forme d'une tige sensiblement cylindrique (3, 13) qui se rétrécit en direction de son extrémité libre.

3. Élément de fixation selon l'une des revendications 1 ou 2, caractérisé en ce que la zone de raccordement (2) est pourvue d'un filetage extérieur (5).

4. Élément de fixation selon l'une des revendications 1 ou 2, caractérisé en ce que la zone de raccordement (12) est conçue sous la forme d'une tête de clou (15).

5. Élément de fixation selon l'une des revendications 1 à 4, en acier austénitique allié à l'azote avec des teneurs de
2 à 22 % de Mn
1 à 3 % de Mo
0,2 à 1,2 % de N
15 à 26 % de Cr
0 à 17 % de NI.
